# EUROPÄISCHE PATENTANMELDUNG

(11) **EP 1 022 126 A2**
(43) Veröffentlichungstag der Anmeldung: **26.07.2000**
(21) Anmeldenummer: 99125613.2
(22) Anmeldetag: 22.12.1999
(51) Int. Cl.: B32B 21/00

(54) **Verfahren zur Herstellung einer auf Holzwerkstoff basierenden Schichtplatte sowie Schichtplatte und Holzwerkstoffplatte**

(30) Priorität: 23.01.1999 DE 19902673
(71) Anmelder: Thermopal Dekorplatten Gmbh & Co. KG, 88299 Leutkirch im Allgäu (DE)
(72) Erfinder: Meyer, Ralph, 88299 Leutkirch im Allgäu (DE); Gold, Manuel, Dr., 78452 Frauenzell (DE)
(74) Vertreter: Patentanwälte Eisele, Otten, Roth & Dobler

(57) **Zusammenfassung**

Es wird ein Verfahren zur Herstellung einer auf Holzwerkstoff basierenden Schichtplatte vorgeschlagen, das sich erfindungsgemäß dadurch auszeichnet, dass auf einer OSB-Platte beidseitig eine Holzwerkstoffplatte mit merklich feiner strukturierter Oberfläche als die der OSB-Platte aufgeklebt wird. Des Weiteren wird eine Holzwerkstoffplatte vorgeschlagen, die auf wenigstens einer Seite eine thermoaktivierbare Klebeschicht trägt.

## Beschreibung

Die Erfindung betrifft ein Verfahren zur Herstellung einer auf Holzwerkstoff basierenden Schichtplatte sowie eine Schichtplatte und eine Holzwerkstoffplatte.

### Stand der Technik

Auf Holzwerkstoff basierende Schichtplatten sind z. B. in Form von Tischlerplatten, Furnierplatten oder einer mit Schichtstoffen laminierten Spanplatte (Verbundplatte) bekannt geworden. Die Auswahl der Schichtplatte hängt vom Einsatzzweck ab.

Mit Verbundplatten sind beispielsweise in vielfältigem Design ausgestaltete Oberflächen möglich, wobei unter Verwendung von z. B. eines HPL's (High Pressure Laminate) sich zudem besonders widerstandsfähige Oberflächen erzielen lassen.

Die im Allgemeinen dabei als Trägerplatte verwendete Spanplatte genügt jedoch in Verbindung mit einem Schichtstoff nicht immer den gewünschten Stabilitätsanforderungen, insbesondere was die Biegefestigkeit angeht. Deshalb ist man dazu übergegangen, bei Verbundplatten als Trägerplatte eine Tischlerplatte einzusetzen, die insbesondere in Längsrichtung der im Kernbereich liegenden Längsstäbe eine deutliche höhere Biegefestigkeit besitzt.

Ein solcher Aufbau weist jedoch Nachteile auf. Zunächst können sich die Längsstäbe im Kernbereich der Tischlerplatte bis in die Deckbeschichtung abzeichnen, wodurch eine optisch unruhige Deckschichtoberfläche entsteht. Des Weiteren treten, bedingt durch Dickentoleranzen und Schwundverhalten der Vollholzmittellagen, Hohlräume zwischen Deckschicht und Mittellagen auf, wodurch das Kunstharz bei einer MelaminharzDirektbeschichtung in der Deckschicht nur unzureichend fließt beziehungsweise aushärtet und so Porositäten verbleiben.

Darüber hinaus sind Tischlerplatten vergleichsweise teuer. Aus diesem Grund scheidet auch der Einsatz einer Furnierplatte aus.

Im Weiteren sind sogenannte OSB-Platten (Oriented Strand Board) bekannt, die aus groben normalerweise dreischichtig kreuzweise gestreuten Flachspänen bestehen. OSB-Platten sind im Vergleich zu herkömmlichen Spanplatten biegefester. Für eine Belegung mit dekorativen Laminaten, wie z. B. ein HPL oder in Form einer Direktbeschichtung aus kunstharzimprägnierten Papieren, ist jedoch eine OSB-Platte nicht geeignet, da die Oberflächenstruktur dieser Platte eine optische Unruhe in der Deckschicht verursacht.

### Aufgabe und Vorteile der Erfindung

Der Erfindung liegt die Aufgabe zugrunde, eine holzwerkstoffbasierende Schichtplatte bereitzustellen, die eine vergleichsweise hohe Biegefestigkeit und eine ausreichende Oberflächengleichmäßigkeit aufweist.

Diese Aufgabe wird erfindungsgemäß durch ein Verfahren gemäß Anspruch 1 gelöst. Weiterhin betrifft die Erfindung eine Schichtplatte sowie eine Holzwerkstoffplatte.

Ausgangspunkt der Erfindung ist ein Verfahren zur Herstellung einer auf Holzwerkstoff basierenden Schichtplatte. Der Kerngedanke bei diesem Verfahren liegt nun darin, dass auf einer OSB-Platte beidseitig eine Holzwerkstoffplatte, wie zum Beispiel eine Span- oder HDF-Platte (hochdichte Faserplatte) aufgeklebt wird, bei welcher die Struktur der Oberfläche merklich feiner ist, als bei der OSB-Platte. Durch diese Maßnahme wird eine Schichtplatte erzeugt, die die Festigkeit, insbesondere Biegefestigkeit, einer OSB-Platte aufweist, jedoch mit einer deutlich gleichmäßigeren Oberfläche. Vorzugsweise liegt die Dicke der beiden Holzwerkstoffplatten der Deckschicht deutlich unter der Dicke der OSB-Platte. Auf diese Weise wird sichergestellt, dass die Festigkeitseigenschaften der Schichtplatte im Wesentlichen durch die OSB-Platte bestimmt werden.

Eine derartige Schichtplatte eignet sich besonders gut als Trägerplatte für eine Verbundplatte, da die außen angebrachten Platten eine ausreichende Oberflächengleichmäßigkeit für das Aufbringen einer dekorativen weiteren Schicht besitzen.

Bei einer besonders bevorzugten Ausgestaltung der Erfindung wird die OSB-Platte vor dem Aufbringen der Holzwerkstoffplatten geschliffen. Durch diese Maßnahme wird die jeweilige Oberfläche der OSB-Platte eingeebnet. Des Weiteren wird eine für die Verklebung affine Oberfläche erzeugt, da bei der Herstellung der OSB-Platte regelmäßig Rückstände von Kleber- und/oder Trennmitteln an deren Oberfläche anhaften, die den Verklebeschritt behindern könnten.

Besonders vorteilhaft ist das Aufkleben der Holzwerkstoffplatte unter Druck mittels Kaltleim (Weißleim) oder Heißkleber (vorzugsweise auf Harnstoffbasis). Dies stellt einen vergleichsweise einfachen Verfahrensschritt dar. In einem alternativen Verfahrensschritt wird die Holzwerkstoffplatte mittels einer thermoaktivierbaren Klebeschicht, z. B. Klebefolie, unter Druck und Hitze aufgeklebt, die entweder auf die jeweilige Seite der Holzwerkstoffplatte oder der OSB-Platte zuvor aufgebracht wurde. Diese Verfahrensweise hat den Vorteil, dass nach aufgebrachter thermoaktivierbarer Klebefolie der Verklebeschritt ohne zusätzliche Klebemittel zu jedem späteren Zeitpunkt stattfinden kann.

Bei einer besonders bevorzugten Ausgestaltung der Erfindung wird auf die Oberfläche wenigstens einer Holzwerkstoffplatte eine dekorative Schicht aufgebracht. Auf diese Weise entsteht eine Verbundplatte mit vergleichsweise größerer Festigkeit, insbesondere Biegefestigkeit.

Als dekorative Schicht kommt z. B. eine kunstharzimprägnierte Schicht in Form eines HPL's (High Pressure Laminate) oder durch eine Direktbeschichtung realisiert, infrage.

Für einen flexiblen Verfahrensablauf ist es im Weiteren bevorzugt, wenn zunächst die Holzwerkstoffplatte auf einer Oberflächenseite mit der dekorativen Schicht und auf der anderen Oberflächenseite mit einer thermoaktivierbaren Klebeschicht versehen wird, und dass anschließend dieses Schichtsystem auf die OSB-Platte unter Druck und Hitze aufgeklebt wird. In diesem Zusammenhang ist es vorteilhaft, wenn als dekorative Schicht eine kunstharzimprägnierte Schicht eingesetzt wird und bei der Aufbringung der dekorativen und der thermoaktivierbaren Schicht auf die Holzwerkstoffplatte unter Druck und Hitze die Temperatur derart gewählt wird, dass das Kunstharz und die Klebeschicht aufschmelzen und sich damit mit der Holzwerkstoffplatte verbinden.

Bei einer erfindungsgemäßen Holzwerkstoffplatte ist es im Weiteren bevorzugt, dass auf wenigstens einer Oberflächenseite eine thermoaktivierbare Klebeschicht aufgebracht ist und vorzugsweise auf der gegenüberliegenden Seite eine Dekorschicht aufgebracht ist.

Um die Holzwerkstoffplatte insbesondere in dem erfindungsgemäßen Verfahren einsetzen zu können, ist es im Weiteren bevorzugt, wenn die Dicke der Platte im Bereich von 2-3,5 mm liegt.

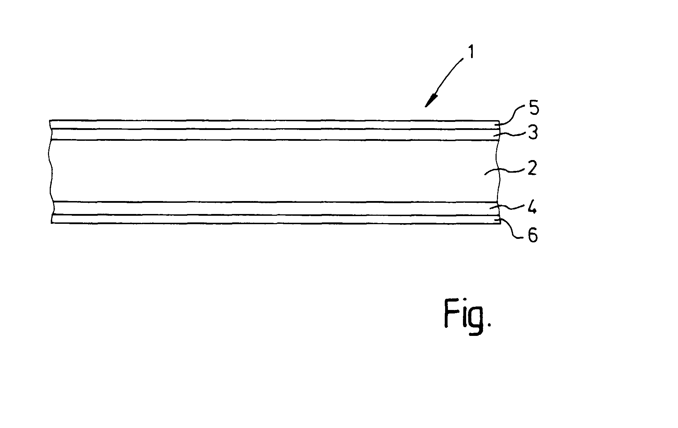

Ein Ausführungsbeispiel der Erfindung ist in der Zeichnung dargestellt und im Folgenden unter Nennung von weiteren Vorteilen und Einzelheiten näher erläutert.

Die Figur zeigt ein ausschnittsweises Schnittbild einer erfindungsgemäßen Schichtplatte 1, die als Mittelschicht eine OSB-Platte 2 besitzt. Die OSB-Platte 2 besteht im Allgemeinen aus groben Flachspänen, die dreischichtig kreuzweise gestreut sind. Vorzugsweise ist die Dicke der Schichten für die beiden Orientierungsrichtungen der Flachspäne ungefähr gleich, so dass hinsichtlich der Biegefestigkeit im Wesentlichen keine Vorzugsrichtung auftritt.

Auf die gegenüberliegenden Außenflächen der OSB-Platte 2 ist jeweils z. B. eine HDF-Platte 3, 4 aufgeklebt. Die HDF-Platten 3, 4 sind mit einer dekorativen Schicht 5, 6 versehen, die z. B. in einem Direktbeschichtungsverfahren auf das Schichtsystem HDF-Platte, OSB-Platte, HDF-Platte aufgebracht wurde.

## Patentansprüche

1. Verfahren zur Herstellung einer auf Holzwerkstoff basierenden Schichtplatte, dadurch gekennzeichnet, dass als Basisplatte eine OSB-Platte eingesetzt wird und dass auf die OSB-Platte (2) beidseitig eine Holzwerkstoffplatte (3, 4) mit merklich feiner strukturierter Oberfläche als die der OSB-Platte aufgeklebt wird.

2. Verfahren nach Anspruch 1, dadurch gekennzeichnet, dass die jeweilige Oberflächenseite der OSB-Platte (2) vor dem Aufbringen der Holzwerkstoffplatten geschliffen wird.

3. Verfahren nach Anspruch 1 oder 2, dadurch gekennzeichnet, dass die Holzwerkstoffplatte mittels Kaltleim oder Heißkleber unter Druck aufgeklebt wird.

4. Verfahren nach einem der vorhergehenden Ansprüche, dadurch gekennzeichnet, dass die Holzwerkstoffplatte (3, 4) mittels einer thermoaktivierbaren Klebeschicht unter Druck und Hitze aufgeklebt wird, die entweder zuvor auf die jeweilige Seite der Holzwerkstoffplatte (3, 4) oder der OSB-Platte (2) aufgebracht wurde.

5. Verfahren nach einem der vorhergehenden Ansprüche, dadurch gekennzeichnet, dass auf die außenliegende Oberflächenseite wenigstens einer Holzwerkstoffplatte (3, 4) eine dekorative Schicht (5, 6) aufgebracht wird.

6. Verfahren nach Anspruch 5, dadurch gekennzeichnet, dass die dekorative Schicht auf die Holzwerkstoffplatte vor dem Aufkleben auf die OSB-Platte aufgebracht wird.

7. Verfahren nach einem der Ansprüche 5 oder 6, dadurch gekennzeichnet, dass zunächst die Holzwerkstoffplatte auf einer Oberflächenseite mit der dekorativen Schicht und auf der anderen Seite mit einer thermoaktivierbaren Klebeschicht versehen wird, und dass anschließend dieses Schichtsystem auf die OSB-Platte unter Druck und Hitze aufgeklebt wird.

8. Verfahren nach Anspruch 7, dadurch gekennzeichnet, dass als dekorative Schicht eine kunstharzimprägnierte Schicht eingesetzt wird und dass bei der Aufbringung der dekorativen Schicht und der thermoaktivierbaren Schicht auf die Holzwerkstoffplatte unter Druck und Hitze die Temperatur derart gewählt wird, dass das Kunstharz und die Klebeschicht aufschmelzen.

9. Holzwerkstoffplatte, dadurch gekennzeichnet, dass auf wenigstens einer Oberflächenseite eine thermoaktivierbare Klebeschicht aufgebracht ist.

10. Holzwerkstoffplatte nach Anspruch 9, dadurch gekennzeichnet, dass auf der gegenüberliegenden Oberflächenseite eine Dekorschicht aufgebracht ist.

11. Holzwerkstoffplatte nach Anspruch 9 oder 10, dadurch gekennzeichnet, dass die Dicke der Platte im Bereich von 2 bis 3,5 mm liegt.

12. Schichtplatte, die auf Holzwerkstoff basiert, dadurch gekennzeichnet, daß eine Mittelschicht aus einer OSB-Platte besteht und daß beidseitig Holzwerkstoffplatten, insbesondere nach einem der Ansprüche 9 bis 11, aufgeklebt sind, die eine merklich feiner strukturierte Oberfläche als die der OSB-Platten besitzen.
